# EUROPEAN PATENT SPECIFICATION

(11) **EP 1 601 089 B1**
(45) Date of publication and mention of the grant of the patent: **11.08.2010**
(21) Application number: 05010940.4
(22) Date of filing: 20.05.2005
(51) Int. Cl.: H02M 1/00, H02M 1/12

(54) **Power supply apparatus and an air conditioner using the same**
Leistungsversorgungsvorrichtung und Klimaanlage unter Verwendung derselben
Dispositif d'alimentation de puissance et climatisation l'utilisant

(30) Priority: 25.05.2004 JP 2004154285
(43) Date of publication of application: 30.11.2005
(73) Proprietor: Panasonic Corporation, Kadoma-shi Osaka 571-8501 (JP)
(72) Inventor: Maeda, Shiro, Otsu-shi Shiga 520-2101 (JP); Takeda, Yoshihiko, 514 Doeruarusu, Nishinomiya-shi Hyogo 662-0854 (JP)
(74) Representative: Eisenführ, Speiser & Partner

(56) References cited:
- EP-A- 0 586 885
- EP-A- 1 298 782
- US-A- 4 222 096
- US-A- 4 855 890
- US-A- 5 416 687
- US-A1- 2001 005 323

## Description

### FIELD OF THE INVENTION

The present invention relates to a power supply apparatus that uses a rectifying system having a bridge rectifier to supply power with a high power factor and low distortion to an equipment or system, and also to an air conditioner using the power supply apparatus.

### BACKGROUND OF THE INVENTION

Japanese Unexamined Patent Appl. Pub. 2002-223571, for example, teaches a high power factor power supply apparatus having a capacitor added to a full-wave rectifier circuit to supply low distortion power with a suppressed high frequency component.

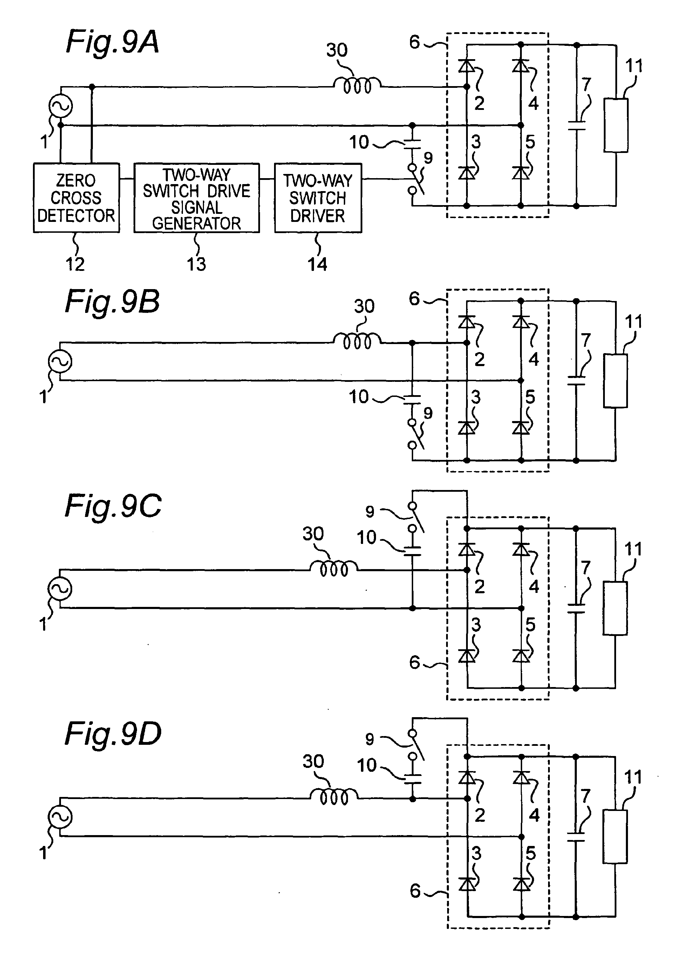

Figs. 9A, 9B, 9C, and 9D show the prior art power supply apparatus taught in Japanese Unexamined Patent Appl. Pub. 2002-223571. As shown in Figs. 9A, 9B, 9C, and 9D this power supply apparatus has an AC power source 1, a bridge rectifier 6 composed of diodes 2 to 5, a smoothing capacitor 7, a reactor 30, a two-way switch 9, a capacitor 10, a zero-cross detector 12, a two-way switch drive signal generator 13, and a two-way switch driver 14.

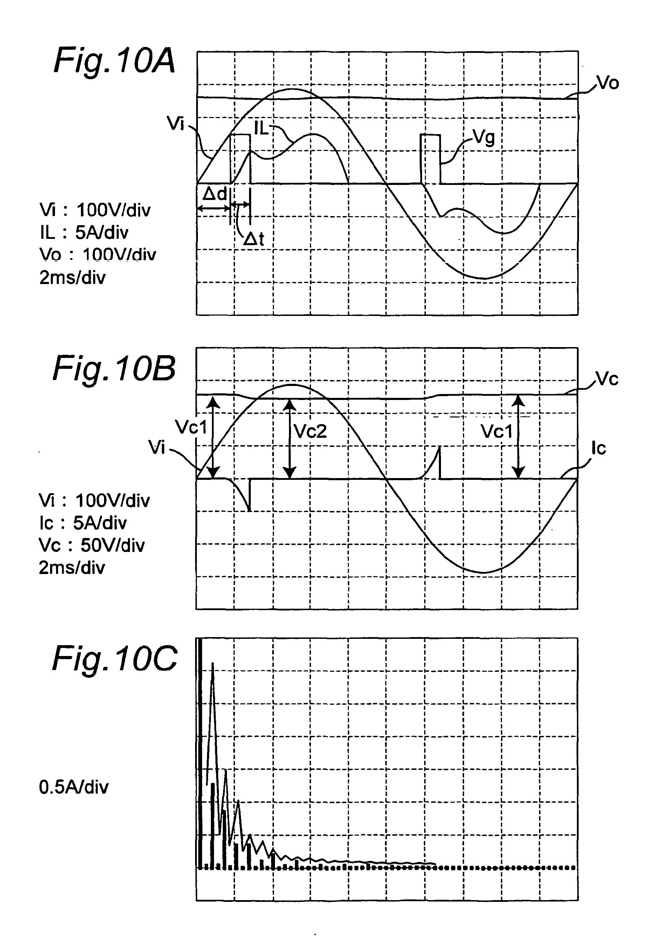

The operation of this prior art power supply apparatus is described below with reference to Figs. 10A, 10B, and 10C showing the operating waves from selected parts of the power supply apparatus.

If the two-way switch 9 turns on at delay Δd from the zero cross in the positive half of the AC voltage cycle, a serial resonance current flows from the AC power source 1 through the reactor 30, 2, smoothing capacitor 7, two-way switch 9, capacitor 10, and back to the AC power source 1, and the charge from the capacitor 10 is discharged to the smoothing capacitor 7. If the two-way switch 9 then turns off at time Δt from when the two-way switch 9 turns on, the current flowing from the reactor 30 passes diode 2 and diode 5, and the normal full-wave rectification operation continues.

If the two-way switch 9 turns on at delay Δd from the zero cross in the negative half of the AC voltage cycle, a serial resonance charge current flows from the AC power source 1 through the capacitor 10, two-way switch 9, diode 3, reactor 30, and back to the AC power source 1. If the two-way switch 9 then turns off at time Δt, the current flowing from the reactor 30 passes diode 4 and diode 3, and the normal full-wave rectification operation continues.

By appropriately setting the inductance of the reactor 30 and the capacitance of the capacitor 10, and setting Δd and Δt appropriately according to the load in the above operation, a high power factor and a suppressed high frequency range can be achieved as shown in Fig. 10C, and the DC output voltage can be controlled by the step-up operation of the reactor 30 and capacitor 10.

EP 1 298 782 A2 discloses an inverter air-conditioner including a bridge rectifying circuit that rectifies an ac from an ac power supply, a reactor coupled between the ac power supply and a first end of an ac input to the bridge rectifying circuit, a capacitor coupled via a bi-directional switch between a second end of the ac input and a dc output terminal, a smoothing capacitor, zero-cross detecting means, bi-directional switch driving signal generating means, bi-directional switch driving means, compressor driving means and a compressor.

A power factor correction circuit is disclosed in US 4,855,890. A power circuit with smoothing choke coil inductance varying circuit is disclosed in US 2001/0005323 A1. A dc power supply circuit with high power factor is disclosed in US 4,222,096. A dc power-supply unit is disclosed in EP 0 586 885 A1. In all these devices a variable inductor is varied by a control system, where a change of the input current is followed by a change of the inductance with delay.

### DISCLOSURE OF THE INVENTION

A problem with the conventional power supply apparatus described above is that while good performance is possible in a relatively low capacity power supply apparatus, the DC output voltage and power factor drop when a high capacity power supply is used. More particularly, the inductance of the reactor 30 must be increased in order to achieve a high capacity power supply that clears the IEC high frequency regulations. As a result, the voltage drop caused by the reactor 30 increases, the DC output voltage drops, and the power factor drops due to an increase in the phase shift between the input current and supply voltage.

The present invention is directed to solving the foregoing problem, and an object of the invention is to provide a power supply apparatus that suppresses a drop in the DC output voltage and power factor during high load operation.

To achieve this object, the inductance of the reactor when the input current to the reactor is in a high current range exceeding a specified level is less than the inductance in a low current range below a specified level.

To achieve the foregoing object, a power supply apparatus is proposed according to the present invention as defined in claim 1. A power supply apparatus according to the present invention can thus suppress current phase delay and a voltage drop at the reactor during high output operation, and can thus avoid a drop in the output voltage and power factor.

Because the reactor inductance is low when the load is high, the voltage drop at the reactor decreases and the current phase delay is reduced. As a result, a power supply apparatus according to the present invention can suppress a drop in the output voltage and can suppress a drop in the power factor by reducing the phase shift between the input current and the supply voltage.

A power supply apparatus according to the present invention can thus suppress a drop in the DC output voltage and power factor when driving a heavy load while controlling the output voltage.

By using a power supply apparatus according to the present invention, an air conditioner according to the present invention can operate with a suppressed high frequency range, improved compressor drive efficiency, and a higher maximum output level.

Other objects and attainments together with a fuller understanding of the invention will become apparent and appreciated by referring to the following description and claims taken in conjunction with the accompanying drawings.

### BRIEF DESCRIPTION OF THE DRAWINGS

Figs. 1A, 1B, 1C, and 1D are schematic diagrams of a power supply apparatus according to a first embodiment of the present invention;
Figs. 2A, 2B, 2C, and 2D describe the operation of a power supply apparatus according to a first embodiment of the present invention;
Figs. 3A, 3B, and 3C describe the waveform characteristics of a power supply apparatus according to a first embodiment of the present invention;
Fig. 4 shows the inductance characteristic of a reactor in the first embodiment of the present invention;
Figs. 5A, 5B, and 5C are waveform diagrams showing the operating waves when the current supply of a power supply apparatus according to a first embodiment of the present invention is approximately specified level Ia, and compares the harmonic component of this power supply apparatus with the IEC harmonic guideline levels;
Fig. 6A is a waveform diagram showing the input current and output voltage signal under high load conditions when the inductance is constant, and Fig. 6B is a waveform diagram showing the operating waves of a power supply apparatus according to a first embodiment of the present invention under high load conditions;
Fig. 7 shows the inductance characteristic of a reactor in a second embodiment of the present invention;
Fig. 8 shows the control arrangement of an air conditioner according to a third embodiment of the present invention;
Figs. 9A, 9B, 9C, and 9D are schematic diagrams of a conventional power supply apparatus; and
Figs. 10A, 10B, and 10C show the operating waves in a power supply apparatus according to the prior art, and compares the harmonic component of this conventional power supply apparatus with the domestic Japanese harmonic guideline levels.

### DETAILED DESCRIPTION OF THE PREFERRED EMBODIMENTS

Preferred embodiments of the present invention are described below with reference to the accompanying figures. The concept of the present invention is described first.

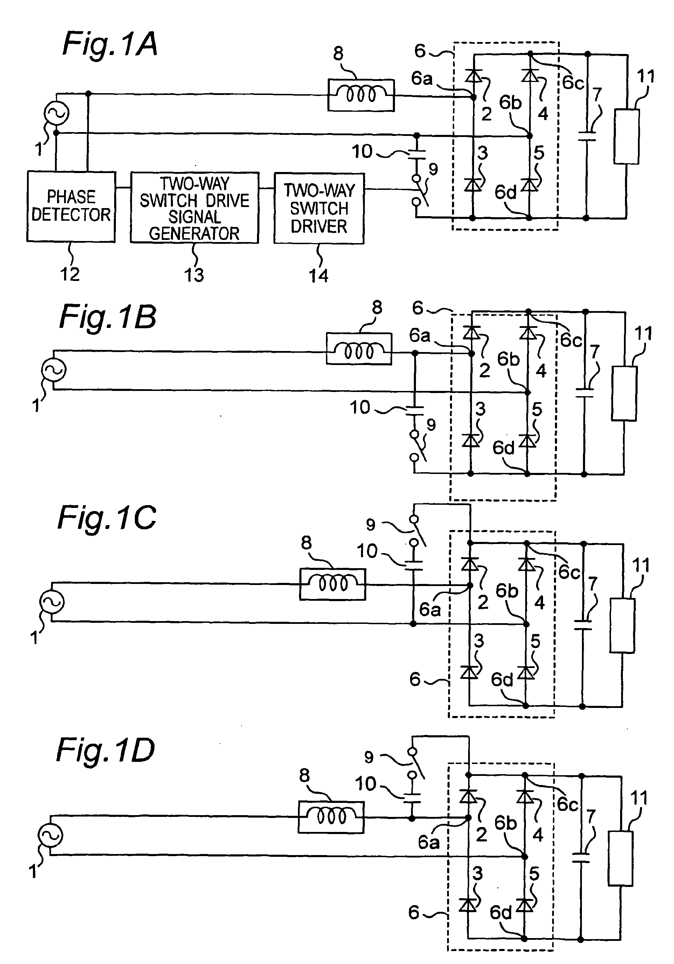

Figs. 1A, 1B, 1C, and 1D are schematic diagrams showing a preferred embodiment of a power supply apparatus according to the present invention. The power supply apparatus shown in Fig. 1A to Fig. 1D has a bridge rectifier 6 composed of four diodes 2 to 5, and an AC power source 1. A reactor 8 is connected between the AC power source 1 and the AC input terminal of the bridge rectifier 6. A capacitor 10 is connected between the AC input terminal and the DC output terminal of the bridge rectifier.

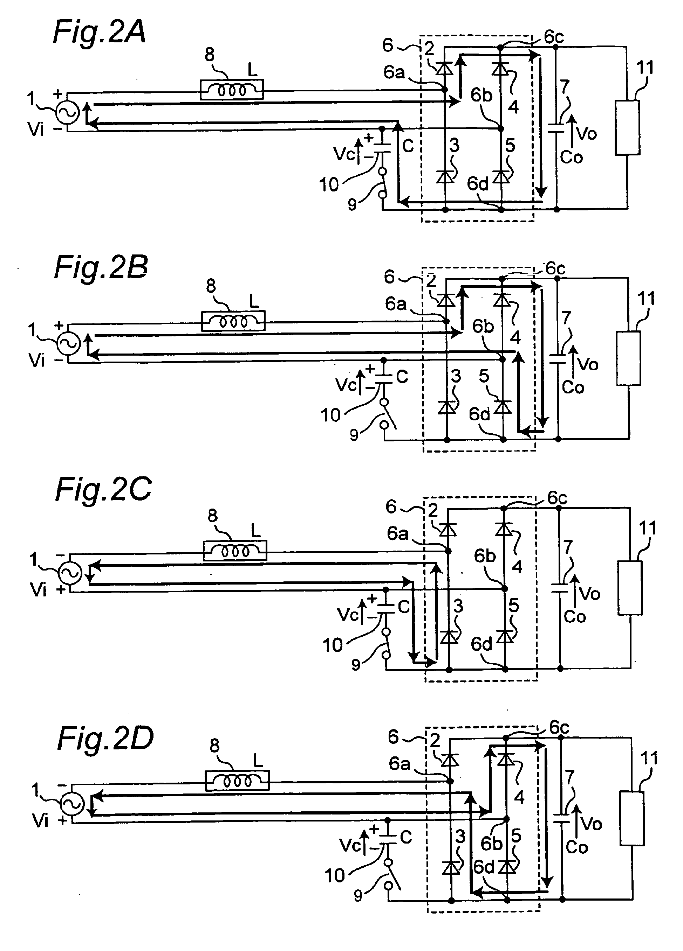

In the arrangements shown in Fig. 1A and Fig. 2B the capacitor 10 is connected between AC input terminal 6a or 6b of the bridge rectifier 6 and the negative DC output terminal 6d through an intervening two-way switch 9. In the arrangements shown in Fig. 1C and Fig. 1D the capacitor 10 is connected between AC input terminal 6a or 6b of the bridge rectifier 6 and the positive DC output terminal 6c.

A smoothing capacitor 7 is connected between the positive DC output terminal 6c and negative DC output terminal 6d of the bridge rectifier 6. The DC output of the bridge rectifier 6 contains sharp fluctuations, and the smoothing capacitor 7 converts this DC output to a smooth direct current output.

This power supply apparatus also has a phase detector 12, a two-way switch drive signal generator 13, and a two-way switch driver 14.

The phase detector 12 detects the supply phase by detecting when the voltage from the AC power source 1 crosses zero. The two-way switch drive signal generator 13 generates a drive signal for the two-way switch 9 based on the output from the phase detector 12. The two-way switch driver 14 then drives the two-way switch 9 based on the output from the two-way switch drive signal generator 13.

Note that the phase detector 12, two-way switch drive signal generator 13, and two-way switch driver 14 are not shown in Fig. 1B, Fig. 1C, and Fig. 1D.

The two-way switch drive signal generator 13 and two-way switch driver 14 are collectively referred to below as the two-way switch control means.

Operation of the power supply apparatus shown in Fig. 1A is described next with reference to Fig. 2A to Fig. 2D.

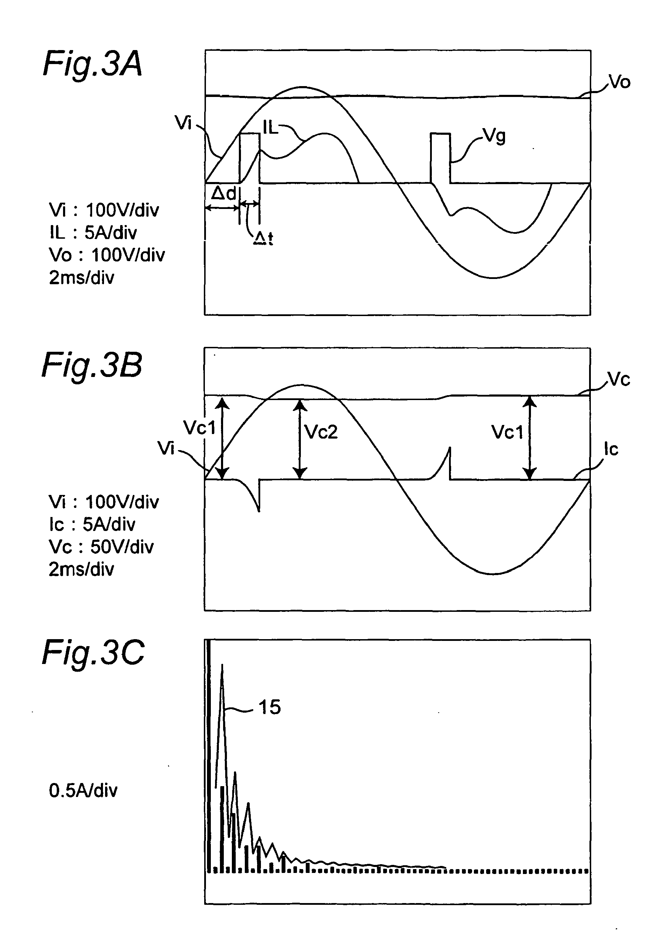

Fig. 2A and Fig. 2B show the operation of the power supply apparatus during the positive half cycle of the AC input voltage Vi, and Fig. 2C and Fig. 2D show the negative half cycle. Fig. 3A and Fig. 3B show the waveforms in the power supply apparatus shown in Fig. 1A when Vi is 200 V, L is 10 mH, C is 300 µF, and Co is 1800 µF.

Fig. 3A shows the waveform of the AC input voltage Vi, the current (AC input current) IL passing the reactor 8, the DC output voltage Vo, and the drive signal Vg for the two-way switch 9.

Fig. 3B shows the AC input voltage Vi, the input current Ic to the capacitor 10, and the voltage Vc between the terminals of the capacitor 10.

The two-way switch 9 turns off just after the AC input voltage Vi crosses zero into the positive half of the AC cycle, the DC output voltage Vo is greater than the AC input voltage Vi, diode 2 and diode 5 are reverse biased, and the input current does not flow.

Because the capacitor 10 is charged in the previous cycle, the capacitor 10 stores voltage Vc1 with the polarity as shown in the figure at this time. When the two-way switch drive signal generator 13 generates an ON signal for the two-way switch 9 and two-way switch driver 14 turns the two-way switch 9 on at specified time Δd after the AC input voltage Vi crosses zero from negative to positive, current flows as indicated by the arrow in Fig. 2A. Current thus flows sequentially from the AC power source 1 to the reactor 8, diode 2, smoothing capacitor 7, and capacitor 10, the capacitor 10 discharges, and the voltage thus drops below Vc1.

Note that the specified time Δd from the zero cross point is set so that the sum of the AC input voltage Vi and voltage Vc1 of the capacitor 10 is greater than the voltage Vo of the smoothing capacitor 7 when the two-way switch 9 turns on.

When the two-way switch drive signal generator 13 generates an OFF signal for the two-way switch 9 and two-way switch driver 14 turns the two-way switch 9 off at specified time Δt after the two-way switch 9 turns on, the capacitor 10 holds the voltage Vc2 stored at that time, current flows sequentially from the AC power source 1 to the reactor 8, diode 2, smoothing capacitor 7, and diode 5 as indicated by the arrow in Fig. 2B, and gradually goes to zero as the AC input voltage Vi drops.

The two-way switch 9 is off immediately after the AC input voltage Vi crosses zero into the negative half of the AC cycle, DC output voltage Vo is greater than AC input voltage Vi, diode 3 and diode 4 are reverse biased, and the input current therefore does not flow.

When the two-way switch drive signal generator 13 generates an ON signal for the two-way switch 9 and two-way switch driver 14 turns the two-way switch 9 on at specified time Δd after the AC input voltage Vi crosses zero from positive to negative, current flows as indicated by the arrow in Fig. 2C. More specifically, current flows sequentially from the AC power source 1 to the capacitor 10, diode 3, and reactor 8, and the capacitor 10 is charged.

When the two-way switch drive signal generator 13 generates an OFF signal for the two-way switch 9 and two-way switch driver 14 turns the two-way switch 9 off at specified time Δt after the two-way switch 9 turns on, the capacitor 10 holds the accumulated voltage charge Vc1, current flows sequentially from the AC power source 1 to diode 4, smoothing capacitor 7, diode 3, and reactor 8 as indicated by the arrow in Fig. 2D, and gradually goes to zero as the AC input voltage Vi drops.

Thus charging and discharging the capacitor 10 enables the input current to flow from near the zero crossing point of the input voltage, and thus affords a high power factor.

Furthermore, increasing the specified time Δt from when the switch turns on increases flux energy accumulation in the reactor 8 and the charge in the capacitor 10, and thus enables increasing the DC output voltage Vo. Yet further, decreasing the specified time Δt from when the switch turns on enables decreasing the DC output voltage Vo. The DC output voltage Vo can thus be variably controlled by increasing or decreasing specified time Δt.

Furthermore, because the current is a serial resonance current from the reactor 8 to the capacitor 10 or smoothing capacitor 7, current spikes can be suppressed more efficiently compared with the short circuit of a reactor generally used in a step-up circuit, and reactor 8 humming can thus be controlled.

Furthermore, because the current is a serial resonance current from the reactor 8 to the capacitor 10 or smoothing capacitor 7, the current does not contain a high frequency ringing component, and high frequency components can be desirably controlled by appropriately setting the inductance L of the reactor 8, the capacitance C of the capacitor 10, the specified time Δd from the zero cross, and the specified time Δt from when the two-way switch 9 turns on.

Fig. 3C compares the harmonic component of the input current and the domestic Japanese harmonic frequency regulation guideline 15. Harmonics are shown along the x-axis and current is shown along the y-axis in Fig. 3C.

Operation of the power supply apparatuses shown in Fig. 1B to Fig. 1D is the same as the above-described operation of the power supply apparatus shown in Fig. 1A, and further description thereof is thus omitted below.

Preferred embodiments of the present invention are described next with reference to the accompanying figures.

### (Embodiment 1)

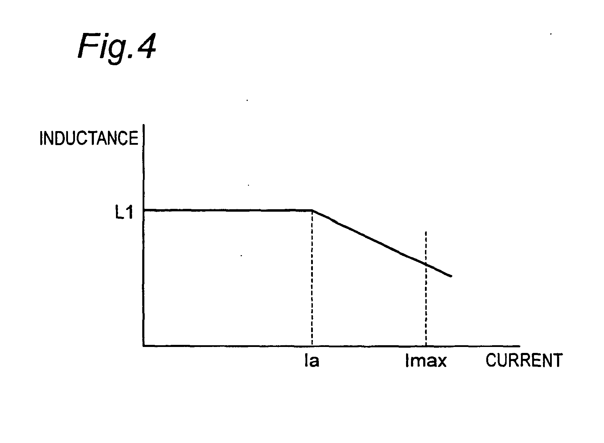

The inductance characteristic of the reactor 8 shown in Figs. 1A, 1B, 1C, and 1D is shown in Fig. 4. The reactor 8 operates in the current range from 0 to Imax. The inductance characteristic of the reactor 8 in this operating current range is described below.

Inductance remains substantially constant at L1 regardless of the current in the current range below specified level Ia, and gradually decreases in conjunction with the increase in current as the current level exceeds specified level Ia. This type of reactor is generally called a saturable reactor. The drop in inductance at high current levels is caused by flux saturation characteristic of the reactor 8 core. A high current band with the desired flux saturation characteristic can therefore be included in the usable current range to current maximum Imax by adjusting the material and shape of the reactor 8 core and the shape of the air gap. The drop in inductance at high current levels can also be desirably controlled.

The specified current level Ia is therefore set to 16 A, the maximum current level under the IEC regulations covering power harmonics. The inductance L1 and capacitance of the capacitor 10 are also preset to constants that clear the IEC regulations covering power harmonics when the two-way switch 9 is switched on and off.

The circuit operation of the arrangement shown in Fig. 1A is described next.

When the input supply power is relatively low, the on time of the two-way switch 9 is relatively short as shown in Figs. 3A, 3B, and 3C, and the capacitor 10 voltage Vc is DC biased with little fluctuation. To suppress harmonics and maintain the DC output voltage as output rises, Δd is decreased and Δt is increased (see Figs. 3A, 3B, and 3C). As output continues to rise Δd goes to 0, and two-way switch 9 turns on when the voltage crosses zero. Fluctuation in the capacitor 10 voltage Vc also increases as output rises until voltage Vc fluctuates between zero and DC output voltage Vo.

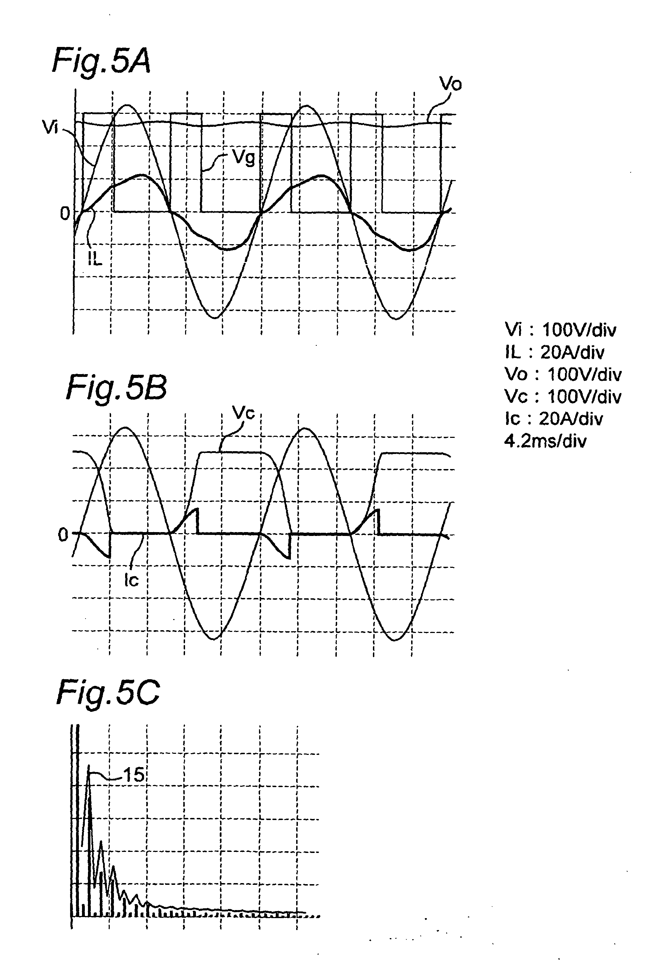

Fig. 5A and Fig. 5B show the operating signals when the supply power is diode 3.5 kW and input current, that is, the current flowing to the reactor 8, is approximately 16 A, that is, substantially equal to Ia, the supply voltage is 230 V at 50 Hz, the capacitance of the smoothing capacitor 7 is 3300 µF, and the capacitance of the capacitor 10 is 100 µF. The inductance of the reactor 8 is set according to the inductance L1 shown in Fig. 4, and is set to 18 mH in this example. The DC output voltage at this time is approximately 268 V with a power factor of 96%. As shown in Fig. 5C, the harmonic component of the input current is less than IEC harmonic frequency level 15.

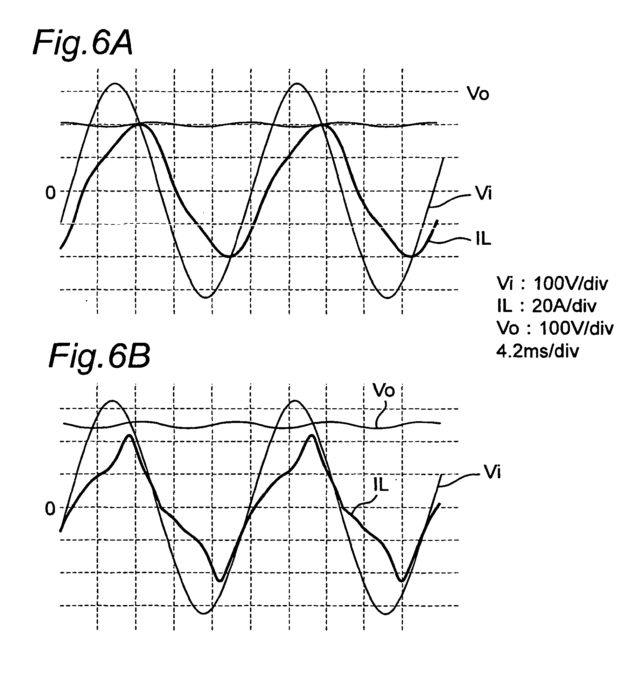

Fig. 6A shows the input current IL and DC output voltage Vo of a reactor 8 with normal inductance characteristics. More particularly, Fig. 6A shows the input current IL and DC output voltage Vo when the inductance is held steady at 18 mH at a current level above specified level Ia, the load is then increased, and the input supply power goes to 5.0 kW. Because the DC output voltage at this time drops greatly, approximately 200 V, various problems can arise depending on how the power supply apparatus is used. If the power supply apparatus is used as the drive power source for a DC motor, for example, this drop in the output voltage could prevent achieving the desired maximum speed. The phase difference between the input current IL and the supply voltage Vi is also great, and the power factor thus also drops significantly to approximately 79%. A problem in conventional reactor applications is that the actual output is thus limited to a smaller output range and cannot be increased.

With the inductance characteristic of a reactor 8 according to this embodiment of the invention as shown in Fig. 4, however, the inductance drops quickly when the input current surpasses specified level Ia. The inductance of the reactor 8 thus drops when the input supply power is in the high current range above Ia, the reactor 8 voltage thus drops and the current phase delay decreases. As a result, a drop in the output voltage can be suppressed and the shift in current phase can be suppressed.

Fig. 6B shows the waveforms when the reactor 8 inductance is reduced to approximately 70% of L1 when the input supply power is 5.0 kW. The DC output voltage Vo is kept high at approximately 248 V. The power factor is also kept high at approximately 90% because the phase shift between the AC input voltage Vi and input current IL is small.

Operation of the arrangements shown in Fig. 1B, Fig. 1C, and Fig. 1D is the same as described above, and further description thereof is thus omitted here. Note, further, that the phase detector 12, two-way switch drive signal generator 13, and two-way switch driver 14 are not shown in Fig. 1B, Fig. 1C, and Fig. 1D.

By thus providing the reactor 8 with inductance characteristics as shown in Fig. 4, a drop in the DC output voltage and power factor during high load operation can be suppressed. Furthermore, because inductance is low at high current levels, the maximum energy accumulation of the reactor can also be suppressed, thus affording a smaller reactor.

Depending upon the current capacity and product size, a plurality of reactors 8 could also be connected in series or parallel.

### (Embodiment 2)

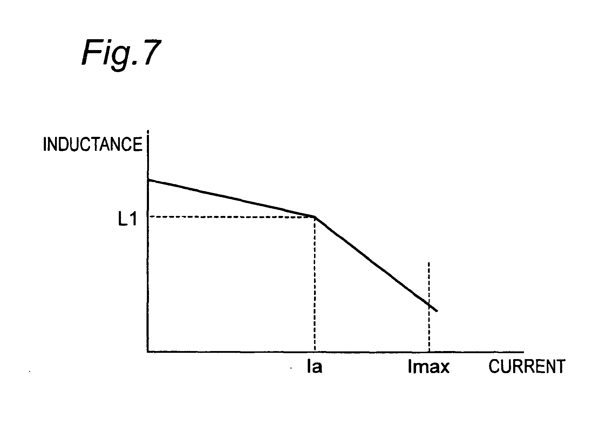

A characteristic of the arrangement of a power supply apparatus according to the present invention is that the higher the reactor 8 inductance, the more effectively power harmonics can be suppressed. On the other hand, an increase in inductance also creates such problems as a voltage drop and increased current phase shift at high current levels, and an increase in reactor size. This second embodiment of the invention addresses this problem as described below with reference to Fig. 7. Fig. 7 shows the inductance characteristic of the reactor 8 in this second embodiment.

More specifically, at low current levels below specified level Ia in the operating current range below Imax, the inductance is set to greater than the inductance L1 in the first embodiment when the supply current is substantially 0. The inductance then gradually decreases as the current supply increases until the inductance goes to L1 when supply current increases to Ia. As the supply current continues to increase in the high current range above Ia, the inductance drops quickly as the current supply rises. Inductance drops with an increase in current above specified level Ia at the same rate as in the first embodiment.

Because the inductance of the reactor 8 can thus be increased at low current levels where the supply current is small, power harmonics can be controlled even more effectively. Furthermore, in terms of the actual reactor design, the air gap in the core can be reduced and the reactor can thus be made smaller if the inductance decreases gradually as current increases as shown in Fig. 7 instead of remaining substantially constant at low current levels as shown in Fig. 4.

By thus using a reactor 8 with inductance characteristics as shown in Fig. 7, power supply harmonics can be controlled more effectively and the size of the reactor can be reduced.

### (Embodiment 3)

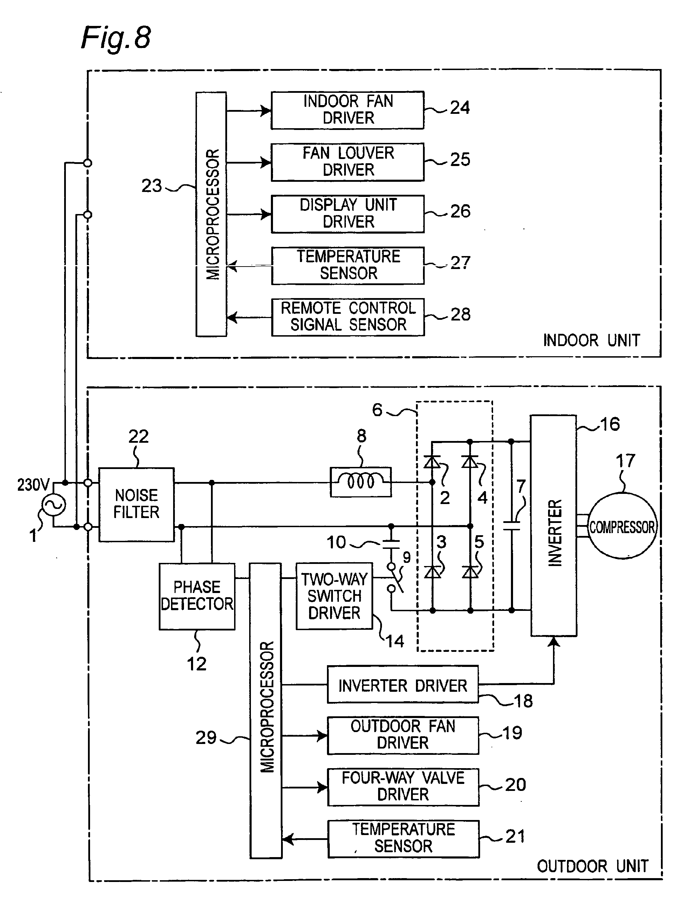

Fig. 8 is a block diagram showing the control arrangement of an air conditioner according to a third embodiment of the present invention. Note that like parts are referenced by like reference numerals in the foregoing first and second embodiments and in Fig. 8, and further description thereof is omitted here.

This air conditioner is composed of an outdoor unit and an indoor unit. The outdoor unit converts the alternating current from the AC power source 1 to direct current by means of a power supply apparatus as described in the foregoing first or second embodiment of the invention. An inverter 16 then converts this DC supply to variable voltage, variable frequency alternating current to enable driving the compressor 17 motor at variable speeds.

A microprocessor 29 generates the drive signal for the two-way switch 9 of the power supply apparatus, controls an inverter driver 18, an outdoor fan driver 19, and a four-way valve driver 20, processes signals from the temperature sensor 21, and thus controls overall operation of the outdoor unit of the air conditioner. A noise filter 22 is disposed at the AC power supply of the outdoor unit to block emission of electromagnetic noise from the outdoor unit.

A microprocessor 23 in the indoor unit controls the indoor fan driver 24, fan louver driver 25, and display unit driver 26, processes signals from the temperature sensor 27 and remote control signal sensor 28, and thus controls overall operation of the indoor unit. Operation of the air conditioner is controlled by communication between microprocessor 29 and microprocessor 23.

Signals from a remote control device, for example, are used to drive the indoor and outdoor fan motors, fan louvers, four-way valve, and compressor 17 in an air conditioner thus comprised to condition the air as desired.

The power supply apparatus of the outdoor unit is controlled to supply a constant DC voltage to the inverter 16 regardless of load fluctuations. As described in the first or second embodiments above, because a drop in the DC voltage at high current levels can be suppressed, the maximum speed of the compressor 17 can be increased, and the maximum output of the air conditioner can be increased.

Furthermore, because a high power factor can be maintained even under a heavy load, the maximum current consumption of the air conditioner can also be reduced. Energy efficient operation can also be achieved by increasing the number of winds in the motor coil of the compressor 17 and thus controlling the motor current.

Furthermore, because the reactor 8 size can be decreased as described in the first and second embodiments, the size and weight of the outdoor unit of the air conditioner can also be reduced.

Because the current flowing to the reactor 8 in a power supply apparatus according to the present invention is a serial resonance wave, the change in reactor current at the moment the two-way switch 9 breaks is smooth, reactor humming can be suppressed, and a quieter air conditioner can be achieved.

By switching the two-way switch 9 once every half cycle, a power supply apparatus according to the present invention produces substantially no EMI emissions when the two-way switch 9 operates. A simple noise filter 22 can thus be used, and the size and cost of the air conditioner can be reduced.

A power supply apparatus according to the present invention thus affords both a high power factor under high load conditions while also maintaining the output voltage, and can thus be used in a high output inverter-type air conditioner.

The invention being thus described, it will be obvious that it may be varied in many ways. Such variations are not to be regarded as a departure from the scope of the invention, and all such modifications as would be obvious to one skilled in the art are intended to be included within the scope of the following claims.

## Claims

1. A power supply apparatus comprising:
an AC power source (1);
a bridge rectifier (6) composed of four diodes (2,3,4,5) for full-wave rectifying alternating current from the AC power source (1), said bridge rectifier having an AC input terminal (6a,6b) and a DC output terminal (6c,6d);
a smoothing capacitor (7) connected to the DC output terminal (6c,6d) of the bridge rectifier (6);
a capacitor (10) connected between the AC input terminal (6a,6b) and DC output terminal (6c,6d) of the bridge rectifier (6) through an intervening two-way switch (9);
a phase detection means (12) for detecting the phase of the AC power source voltage;
a two-way switch control means (13,14) for controlling the two-way switch (9) based on a signal output from the phase detection means (12); and
a reactor (8) connected between the AC power source (1) and AC input terminal (6a,6b) of the bridge rectifier (6), **characterized in that**
the reactor (8) has such a characteristic that the inductance thereof remains substantially constant or decreases gradually in conjunction with an increase of the current flowing through the reactor (8) when the reactor current is below a predetermined level (la), and the reactor inductance decreases sharply in conjunction with an increase of the reactor current when the reactor current is above the predetermined level (la).

2. A power supply apparatus as described in claim 1, **characterized in that** said predetermined level (la) is set to 16A.

3. A power supply apparatus as described in claim 1, **characterized in that** the supply power of the AC power source (1), corresponding to said predetermined level (la), is set to 3.5 kW.

4. A power supply apparatus as described in claim 1, **characterized in that** the maximum current level (lmax) of the usable current of the reactor is greater than said predetermined level (la).

5. A power supply apparatus as described in claim 1 or 3, **characterized in that** the maximum supply power of the AC power source (1), corresponding to the maximum current level (lmax) of the usable current of the reactor, is greater than the supply power corresponding to said predetermined level (la).

6. An air conditioner comprising:
a power supply apparatus for converting alternating current to direct current; and
an inverter device (16) for converting the direct current output by the power supply apparatus to a variable voltage, variable frequency alternating current, and supplying said alternating current to a motor for driving a compressor (17);
wherein the power supply apparatus comprises
an AC power source (1);
a bridge rectifier (6) composed of four diodes (2,3,4,5) for full-wave rectifying alternating current from the AC power source (1), said bridge rectifier having an AC input terminal (6a,6b) and a DC output terminal (6c,6d);
a smoothing capacitor (7) connected to the DC output terminal (6c,6d) of the bridge rectifier (6);
a capacitor (10) connected between the AC input terminal (6a,6b) and DC output terminal (6c,6d) of the bridge rectifier (6) through an intervening two-way switch (9);
a phase detection means (12) for detecting the phase of the AC power source voltage;
a two-way switch control means (13,14) for controlling the two-way switch (9) based on a signal output from the phase detection means (12); and
a reactor (8) connected between the AC power source (1) and AC input terminal (6a,6b) of the bridge rectifier (6), **characterized in that** the reactor (8) has such a characteristic that the inductance thereof remains substantially constant or decreases gradually in conjunction with an increase of the current flowing through the reactor (8) when the reactor current is below a predetermined level (la), and the reactor inductance decreases sharply in conjunction with an increase of the reactor current when the reactor current is above the predetermined level (la).

7. An air conditioner as described in claim 6, **characterized in that** said predetermined level (la) is set to 16 A.

8. An air conditioner as described in claim 6, **characterized in that** the supply power of AC power source (1), corresponding to said predetermined level (la), is set to 3.5 kW.

9. An air conditioner as described in claim 6 or 7, **characterized in that** the maximum current level (lmax) of the usable current of the reactor is greater than said predetermined level (la).

10. A power supply apparatus as described in claim 6 or 8, **characterized in that** the maximum supply power of the AC power source (1), corresponding to the maximum current level (lmax) of the usable current of the reactor, is greater than the supply power corresponding to said predetermined level (la)

## Patentansprüche

1. Leistungsversorgungsvorrichtung mit:
einer Wechselstromquelle (1),
einem Brückengleichrichter (6), der aus vier Dioden (2, 3, 4, 5) besteht, zum Vollweggleichrichten von Wechselstrom der Wechselstromquelle (1), wobei der Brückengleichrichter einen Wechselstromeingangsanschluss (6a, 6b) und einen Gleichstromausgangsanschluss (6c, 6d) aufweist,
einem Glättungskondensator (7), der mit dem Gleichstromausgangsanschluss (6c, 6d) des Brückengleichrichters (6) verbunden ist,
einem Kondensator (10), der zwischen dem Wechselstromeingangsanschluss (6a, 6b) und dem Gleichstromausgangsanschluss (6c, 6d) des Brückengleichrichters (6) über einen dazwischen geschalteten Zweiwegeschalter (9) verbunden ist,
einem Phasenerfassungsmittel (12) zum Erfassen der Phase der Wechselstromquelle,
einem Zweiwegeschaltersteuermittel (13, 14) zum Steuern des Zweiwegeschalters (9) auf Basis eines Signals, das von dem Phasenerfassungsmittel (12) ausgegeben wird, und
einer Drossel (8), die zwischen der Wechselstromquelle (1) und dem Wechselstromeingangsanschluss (6a, 6b) des Brückengleichrichters (6) verbunden ist, **dadurch gekennzeichnet, dass**
die Drossel (8) eine derartige Charakteristik aufweist, dass ihre Induktanz in Verbindung mit einem Anstieg des Stroms, der durch die Drossel (8) fließt im Wesentlichen konstant bleibt oder sich graduell verringert, wenn sich der Drosselstrom unterhalb eines vorbestimmten Niveaus (la) befindet, und die Reaktorinduktanz in Verbindung mit einem Ansteigen des Reaktorstroms stark ansteigt, wenn sich der Drosselstrom oberhalb des vorbestimmten Niveaus (la) befindet.

2. Leistungsversorgungsvorrichtung nach Anspruch 1, **dadurch gekennzeichnet, dass** das vorbestimmte Niveau (la) auf 16 A eingestellt ist.

3. Leistungsversorgungsvorrichtung nach Anspruch 1, **dadurch gekennzeichnet, dass** die Versorgungsleistung der Wechselstromquelle (1), entsprechend dem vorbestimmten Niveau (la), auf 3,5 kW eingestellt ist.

4. Leistungsversorgungsvorrichtung nach Anspruch 1, **dadurch gekennzeichnet, dass** das maximale Stromniveau (lmax) des nutzbaren Stroms der Drossel größer ist als das vorbestimmte Niveau (la).

5. Leistungsversorgungsvorrichtung nach Anspruch 1 oder 3, **dadurch gekennzeichnet, dass** die maximale Versorgungsleistung der Wechselstromquelle (1), entsprechend dem maximalen Stromniveau (lmax) des nutzbaren Stroms der Drossel, größer als die Versorgungsleistung entsprechend dem vorbestimmten Niveau (la) ist.

6. Klimaanlage, mit:
einer Leistungsversorgungsvorrichtung zum Umwandeln von Wechselstrom in Gleichstrom und
einer Umrichtevorrichtung (16) zum Umsetzen der Gleichstromausgabe der Leistungsversorgungsvorrichtung in eine variable Spannung, einen Wechselstrom mit variabler Frequenz und zum Zuführen des Wechselstroms an einen Motor zum Betreiben eines Kompressors (17),
wobei die Leistungsversorgungsvorrichtung umfasst:
eine Wechselstromquelle (1),
einen Brückengleichrichter (6), der aus vier Dioden (2, 3, 4, 5) besteht, zum Vollweggleichrichten von Wechselstrom der Wechselstromquelle (1), wobei der Brückengleichrichter einen Wechselstromeingangsanschluss (6a, 6b) und einen Gleichstromausgangsanschluss (6c, 6d) aufweist,
einen Glättungskondensator (7), der mit dem Gleichstromausgangsanschluss (6c, 6d) des Brückengleichrichters (6) verbunden ist,
einen Kondensator (10), der zwischen dem Wechselstromeingangsanschluss (6a, 6b) und dem Gleichstromausgangsanschluss (6c, 6d) des Brückengleichrichters (6) über einen dazwischen geschalteten Zweiwegeschalter (9) verbunden ist,
ein Phasenerfassungsmittel (12) zum Erfassen der Phase der Wechselstromquelle,
ein Zweiwegeschaltersteuermittel (13, 14) zum Steuern des Zweiwegeschalters (9) auf Basis eines Signals, das von dem Phasonerfassungsmittel (12) ausgegeben wird, und
eine Drossel (8), die zwischen der Wechselstromquelle (1) und dem Wechselstromeingangsanschluss (6a, 6b) des Brückengleichrichters (6) verbunden ist, **dadurch gekennzeichnet, dass** die Drossel (8) eine derartige Charakteristik aufweist, dass ihre Induktanz in Verbindung mit einem Anstieg des Stroms, der durch die Drossel (8) fließt im Wesentlichen konstant bleibt oder sich graduell verringert, wenn sich der Drosselstrom unterhalb eines vorbestimmten Niveaus (la) befindet, und die Reaktorinduktanz in Verbindung mit einem Ansteigen des Reaktorstroms stark ansteigt, wenn sich der Drosselstrom oberhalb des vorbestimmten Niveaus (la) befindet.

7. Klimaanlage nach Anspruch 6, **dadurch gekennzeichnet, dass** das vorbestimmte Niveau (la) auf 16 A eingestellt ist.

8. Klimaanlage nach Anspruch 6, **dadurch gekennzeichnet, dass** die Versorgungsleistung der Wechselstromquelle (1), entsprechend dem vorbestimmten Niveau (la), auf 3,5 kW eingestellt ist.

9. Klimaanlage nach Anspruch 6 oder 7, **dadurch gekennzeichnet, dass** das maximale Stromniveau (lmax) des nutzbaren Stroms der Drossel größer ist als das vorbestimmte Niveau (la).

10. Klimaanlage nach Anspruch 6 oder 8, **dadurch gekennzeichnet, dass** die maximale Versorgungsleistung der Wechselstromquelle (1), entsprechend dem maximalen Stromniveau (lmax) des nutzbaren Stroms der Drossel, größer als die Versorgungsleistung entsprechend dem vorbestimmten Niveau (la) ist.

## Revendications

1. Appareil d'alimentation électrique comprenant:
une source d'alimentation en courant alternatif (1);
un redresseur en pont (6) composé de quatre diodes (2, 3, 4, 5) servant à redresser en onde pleine le courant alternatif provenant de la source d'alimentation en courant alternatif (1), ledit redresseur en pont ayant une borne d'entrée de courant alternatif (6a, 6b) et une borne de sortie de courant continu (6c, 6d);
un condensateur de lissage (7) connecté à la borne de sortie de courant continu (6c, 6d) du redresseur en pont (6);
un condensateur (10) connecté entre la borne d'entrée de courant alternatif (6a, 6b) et la borne de sortie de courant continu (6c, 6d) du redresseur en pont (6) à travers un commutateur deux voies (9) intermédiaire;
un moyen de détection de phase (12) servant à détecter la phase de la tension de la source d'alimentation en courant alternatif;
un moyen de commande (13, 14) du commutateur deux voies servant à commander le commutateur deux voies (9) sur la base d'un signal délivré en sortie du moyen de détection de phase (12); et
un réacteur (8) connecté entre la source d'alimentation en courant alternatif (1) et la borne d'entrée de courant alternatif (6a, 6b) du redresseur en pont (6), **caractérisé en ce que**
le réacteur (8) a une caractéristique telle que son inductance reste essentiellement constante ou diminue graduellement conjointement avec une augmentation du courant circulant à travers le réacteur (8) lorsque le courant du réacteur est en-dessous d'un niveau prédéterminé (la), et l'inductance du réacteur diminue fortement conjointement avec une augmentation du courant du réacteur lorsque le courant du réacteur est au-dessus du niveau prédéterminé (la).

2. Appareil d'alimentation électrique selon la revendication 1, **caractérisé en ce que** ledit niveau prédéterminé (la) est réglé à 16A.

3. Appareil d'alimentation électrique selon la revendication 1, **caractérisé en ce que** la puissance d'alimentation de la source d'alimentation en courant alternatif (1), correspondant audit niveau prédéterminé (la), est réglée à 3,5 kW.

4. Appareil d'alimentation électrique selon la revendication 1, **caractérisé en ce que** le niveau maximal du courant (lmax) du courant utilisable du réacteur est supérieur audit niveau prédéterminé (la).

5. Appareil d'alimentation électrique selon la revendication 1 ou 3, **caractérisé en ce que** la puissance d'alimentation maximale de la source d'alimentation en courant alternatif (1), correspondant au niveau maximal de courant (lmax) du courant utilisable du réacteur, est supérieure à la puissance d'alimentation correspondant audit niveau prédéterminé (la).

6. Climatiseur comprenant:
un appareil d'alimentation électrique pour convertir du courant alternatif en courant continu; et
un dispositif onduleur (16) pour convertir le courant continu délivré en sortie par l'appareil d'alimentation électrique en un courant alternatif à fréquence variable, à tension variable, et alimenter ledit courant alternatif à un moteur électrique servant à entraîner un compresseur (17) ;
dans lequel l'appareil d'alimentation électrique comprend
une source d'alimentation en courant alternatif (1);
un redresseur en pont (6) composé de quatre diodes (2, 3, 4, 5) pour redresser en onde pleine le courant alternatif provenant de la source d'alimentation en courant alternatif (1), ledit redresseur en pont ayant une borne d'entrée de courant alternatif (6a, 6b) et une borne de sortie de courant continu (6c, 6d);
un condensateur de lissage (7) connecté à la borne de sortie de courant continu (6c, 6d) du redresseur en pont (6);
un condensateur (10) connecté entre la borne d'entrée de courant alternatif (6a, 6b) et la borne de sortie de courant continu (6c, 6d) du redresseur en pont (6) à travers un commutateur deux voies (9) intermédiaire;
un moyen de détection de phase (12) pour détecter la phase de la tension de la source d'alimentation en courant alternatif;
un moyen de commande (13, 14) du commutateur deux voies pour commander le commutateur deux voies (9) sur la base d'un signal délivré en sortie du moyen de détection de phase (12); et
un réacteur (8) connecté entre la source d'alimentation en courant alternatif (1) et la borne d'entrée de courant alternatif (6a, 6b) du redresseur en pont (6), **caractérisé en ce que** le réacteur (8) a une caractéristique telle que son inductance reste essentiellement constante ou diminue graduellement conjointement avec une augmentation du courant circulant à travers le réacteur (8) lorsque le courant du réacteur est en-dessous d'un niveau prédéterminé (la), et l'inductance du réacteur diminue fortement conjointement avec une augmentation du courant du réacteur lorsque le courant du réacteur est au-dessus du niveau prédéterminé (la).

7. Climatiseur selon la revendication 6, **caractérisé en ce que** ledit niveau prédéterminé (la) est réglé à 16A.

8. Climatiseur selon la revendication 6, **caractérisé en ce que** la puissance d'alimentation de la source d'alimentation en courant alternatif (1), correspondant audit niveau prédéterminé (la), est réglée à 3,5 kW.

9. Climatiseur selon la revendication 6 ou 7, **caractérisé en ce que** le niveau maximal de courant (lmax) du courant utilisable du réacteur est supérieur audit niveau prédéterminé (la).

10. Appareil d'alimentation électrique selon la revendication 6 ou 8, **caractérisé en ce que** la puissance d'alimentation maximale de la source d'alimentation en courant alternatif (1), correspondant au niveau maximal de courant (lmax) du courant utilisable du réacteur, est supérieure à la puissance d'alimentation correspondant audit niveau prédéterminé (la).
